# EUROPEAN PATENT SPECIFICATION

(11) **EP 2 418 455 B1**
(45) Date of publication and mention of the grant of the patent: **29.03.2017**
(21) Application number: 10382203.7
(22) Date of filing: 20.07.2010
(51) Int. Cl.: G01B 3/00, G01D 5/347

(54) **Optoelectronic measuring device with a plurality of carrier bodies, and method for aligning said carrier bodies**
Optoelektronische Messvorrichtung mit mehreren Trägerkörpern und Verfahren zur Ausrichtung dieser Trägerkörper
Dispositif de mesure optoélectronique doté d'une pluralité de corps de support et procédé d'alignement desdits corps de support

(43) Date of publication of application: 15.02.2012
(60) Divisional application: 16182629.2
(73) Proprietor: Fagor, S. Coop., 20500 Arrasate-Mondragon (ES)
(72) Inventor: Zunzunegi Múgica, José Javier, 20550, ARETXABALETA (ES); Delgado Jiménez, Juan Carlos, 48960, GALDACANO (ES)
(74) Representative: Igartua, Ismael

(56) References cited:
- US-A- 4 160 328
- US-A- 5 253 430

## Description

### TECHNICAL FIELD

This invention relates to optoelectronic measuring devices that comprise a plurality of carrier bodies, and to methods for aligning said carrier bodies.

### PRIOR ART

Optoelectronic measuring devices adapted for measuring longitudinal movements comprise, generally, a substantially hollow carrier body, a scale arranged inside the carrier body, and a read head that faces the scale and which moves longitudinally in relation to said scale in one or another direction, running on an inner surface of said carrier body. Examples of devices of this type are disclosed, for example, in documents US5016359 and US20020124665.

One very common method of joining these types of devices to a machine where they are to be used is to join the carrier body directly to a bench or work bench of said machine by means such as screws, as disclosed in document US5375338 for example.

If the carrier body to be used comprises a very sizeable length, it is very difficult to handle and/or transport, and as a result of this it is sometimes useful to divide the carrier body into two or more parts. These parts may be fixed directly to the bench or work bench of a machine, one after the other, in such a way that all the parts are aligned and the scale may be correctly arranged. The various parts are aligned taking into account an outer surface of said parts, although, due to the manufacturing tolerances, for example, the various parts may comprise different thicknesses, so that the ensuring of a correct alignment between the outer surfaces does not ensure a correct alignment between the inner surfaces of the various parts, a correct movement of the read head thereby not being guaranteed.

US4160328A1 discloses a segmented longitudinal measuring device which includes a plurality of hollow tubular housing segments. Inside each housing segment is mounted an intermediate support member which in turn serves as a mounting surface for a measuring scale segment. Thus, each segment forms a complete modular unit containing a length of measuring scale, intermediate support member, and housing. Generally the coefficient of thermal expansion of the support members is matched to that of the scale segments, and the support members are mounted on the housing segments in a longitudinally displaceable manner, as by a layer of resilient elastomeric material, for example. The measuring device also includes means for compressing the support members together, end to end, to form a continuous structure extending along the measuring direction. Adjustable contact members are provided between adjacent support members for precise adjustment of the separation between adjacent support members.

### BRIEF DISCLOSURE OF THE INVENTION

It is an object of the invention to provide an optoelectronic measuring device with a plurality of carrier bodies, where, at least to a large extent, a correct alignment between inner surfaces of said carrier bodies is ensured, thereby enabling a correct movement of a read head that runs on said inner surfaces, and a method for carrying out said alignment. This object is achieved with an optoelectronic measuring device according to claim 1 and a method according to claim 6.

The device of the invention comprises at least two carrier bodies joined to each other and a read head that may move longitudinally in relation to said carrier bodies. Each carrier body comprises a longitudinal inner surface on which the read head runs when it moves.

The device also comprises at least one additional element attached to each carrier body, each additional element comprising a specific reference and each additional element being attached to the corresponding carrier body, with the result that a specific reference distance between said reference and the inner surface of the corresponding carrier body is equal for all the carrier bodies and the corresponding additional elements. The references of the various carrier bodies are aligned with each other, so that, as the reference distances are substantially equal in all cases, the inner surfaces of the various carrier bodies are aligned and a correct movement of the read head on them is enabled, even in movements from one carrier body to another.

As a result, rather than an outer surface of the carrier body acting as a reference surface between the various carrier bodies for their alignment, it is the additional elements that are used as a reference to align said carrier bodies, a correct alignment between the inner surfaces of the various carrier bodies being obtained in a comfortable, simple and inexpensive manner, and more accurately than in the prior art.

These and other advantages and characteristics of the invention will be made evident in the light of the drawings and the detailed description thereof.

### DESCRIPTION OF THE DRAWINGS

Figure 1 shows a view in perspective of a preferred embodiment of the optoelectronic measuring device of the invention.
Figure 2 shows a view in perspective and an exploded view of a carrier body and the corresponding additional element of the device of Figure 1.
Figure 3 is a lateral cross-sectional view of a carrier body of the device of Figure 1, with the corresponding additional element.
Figure 4 shows an additional element of the device of Figure 1.

### DETAILED DISCLOSURE OF THE INVENTION

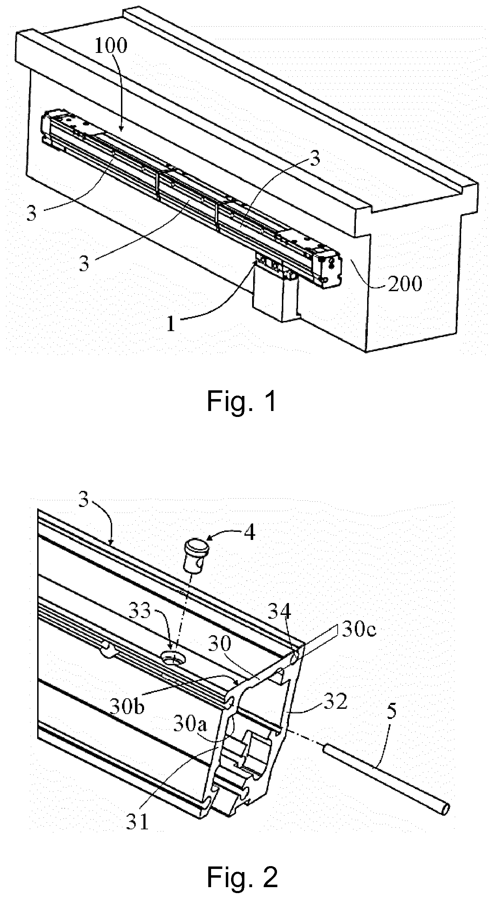

Figures 1 to 3 show a preferred embodiment of the optoelectronic measuring device 100 of the invention, which is designed for measuring lengths. Said device 100 comprises a band or scale 2 and a read head 1 that faces the scale 2 and which moves longitudinally on said scale 2, measuring the lengths in accordance with the movement of said read head 1. The length of the scale 2 depends on the total length to be measured, and on the requirements of the manufacturer and/or the end user.

The scale 2 is arranged inside a carrier body 3 to insulate it from the exterior and prevent, as far as is possible, dirt from settling on it, which would lead to measurement errors. The measurement of sizeable lengths involves the use of a scale 2 with an extensive length, which requires a carrier body 3 of considerable length. Carrier bodies 3 of a considerable length are difficult to transport and handle, as a result of which when its required length is sizeable, instead of just one a plurality of carrier bodies 3 is preferably used in order to make up the required length. The device 100 of the invention is designed for the use of two or more carrier bodies 3.

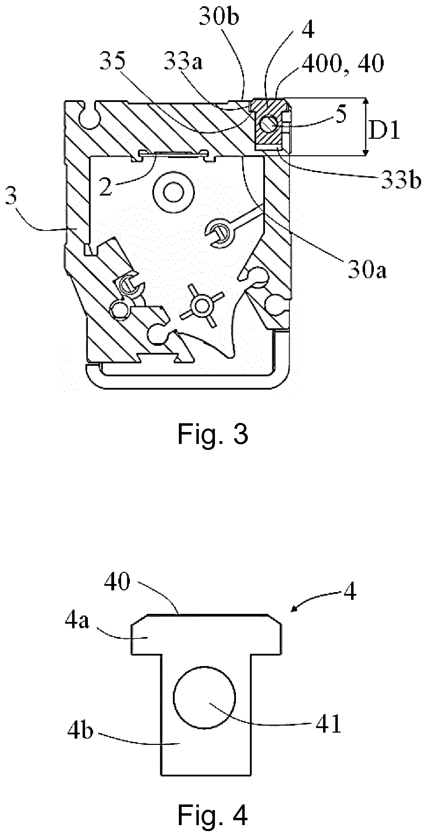

In the embodiment of the device 100 shown in Figure 1, said device 100 comprises three carrier bodies 3 by way of example, although it may comprise more carrier bodies 3 depending on their total length and/or the requirements of the manufacturer and/or the end user, or even only two carrier bodies 3. The carrier bodies 3 are substantially U-shaped, as shown in more detail in Figures 2 and 3, for example, with a base 30 and two walls 31 and 32 that are substantially vertical and facing each other, and the scale 2 of the device 100 is arranged inside the carrier bodies 3. The read head 1 is designed to move longitudinally on the scale 2 inside, running on an inner surface 30a of said carrier bodies 3. The object of the device 100 of the invention is to align correctly and in a simple manner the inner surfaces 30a of the various carrier bodies 3, so that the read head 1 moves without jumping due to misalignments between said carrier bodies 3, which can result in erroneous measurements and/or in the premature breakage of said read head 1.

The device 100 comprises at least one additional element 4for each carrier body 3, associated or referenced to the inner surface 30a of the corresponding carrier body 3, the additional elements 4of the various carrier bodies 3 taking part between them when said carrier bodies 3 are joined together, so that the different inner surfaces 30a of said carrier bodies 3 are correctly aligned. Each additional element 4comprises a reference and is associated to the corresponding carrier body 3 with the result that a specific reference distance D1 between said reference 400 and the inner surface 30a of the corresponding carrier body 3 is equal for all the carrier bodies 3 and their corresponding additional elements 4. The different references 400 are aligned with each other, so that the inner surfaces 30a of the various carrier bodies 3 are aligned.

The thickness 30c of the base 30, delimited between the inner surface 30a and an outer surface 30b, is not always the same due to the process of manufacture of the carrier body 3, which is usually manufactured in an extrusion process and which enables tolerances for said thickness 30c, so that when the carrier bodies 3 are fixed to a structure 200 of a machine (and when they are joined together), if the outer surfaces 30b are taken as a reference for aligning the carrier bodies 3 there is no guarantee that the inner surfaces 30a of the various carrier bodies 3 will be perfectly aligned. In the preferred embodiment of the device 100 of the invention it is not the outer surface 30b that is taken as a reference. Rather it is the additional elements 4 that are taken as a reference for fixing said carrier bodies 3 to the structure 200.

In the preferred embodiment, the additional element 4 comprises an insert that preferably corresponds with a revolving body such as the one shown in Figure 4, and each carrier body 3 comprises a housing 33 that is substantially transversal to the inner surface 30a and which is accessible from the exterior of the carrier body 3, where said additional element 4 is partially arranged. The housing 33 extends from said outer surface 30b towards the inner surface 30a. The length of the housing 33 is, preferably, smaller than the thickness 30c of the base 30, said housing 33 not passing through said base 30 completely. Preferably, each carrier body 3 comprises two housings 33, one in each end of said carrier body 3, an insert 4 being arranged, at least partially, in each housing 33.

In the preferred embodiment the reference 400 corresponds with a reference surface 40 of the additional elements 4, which is substantially parallel to the inner surface 30a. When the additional element 4 is arranged partially in the housing 33, part of said additional element 4 remains outside said housing 33, projecting out from the outer surface 30b. The reference surface 40 corresponds with a surface of the additional element 40 that is outside the housing 33 and which is substantially parallel to the outer surface 30b, as shown in Figure 3, the reference distance D1 thus being greater than the thickness 30c of the base 30 of the corresponding carrier body 3. This also allows said reference distance D1 to be determined more easily and even allows said additional element 4 to be acted on to modify said reference distance D1 when necessary, as explained below.

A method for aligning the carrier bodies 3 of the preferred embodiment of the device 100 is explained below. Said method comprises the following steps:
- Setting step: The setting of a standard reference distance that is used as the required reference distance D1 for all the carrier body 3 / additional element 4 units. A standard reference distance is set, which is greater than the thickness 30c of the carrier body 3 and smaller than the reference distance D1, as a result of which the additional elements 4 that are used comprise dimensions that ensure this circumstance.
- Determination step: The determining, for each carrier body 3 / additional element 4 unit, of the real reference distance D1. This is gauged by measuring said reference D1, possibly by means of a calibre or a conventional member, for example.
- Comparison step: The comparison of each specific reference distance D1 with the pre-set standard reference distance.
- Actuation step: The acting-on of the corresponding reference surface 40, preferably rectifying said reference surface 40, so that a new reference surface 40 is obtained a new smaller reference distance D1 being created until said reference distance D1 is equal to the standard reference distance. This rectification is easily possible thanks to the fact that the alignment means project out from the outer surface 30b of the corresponding carrier body 3. A milling machine or any conventional element or device enabling rectification may be used for rectifying.
- Alignment step: The joining of the various carrier bodies 3 longitudinally, as shown in Figure 1, aligning the reference surfaces 40 of all of them, which comprise a reference distance D1 substantially equal in all cases, and which correspond with the pre-set standard reference distance. As a result all the inner surfaces 30a are correctly aligned, a correct movement of the read head 1 being obtained.

Except for the alignment step, all the steps are carried out during manufacture of the carrier bodies 3. The alignment step, however, is carried out when an optoelectronic measuring device 100 is installed in a machine.

Another alternative to this method is that of determining, for each carrier body 3 / additional element 4 unit, the real reference distance D1 and setting the smallest of them as the standard reference distance. The additional elements 4 of the rest of the carrier body 3 / additional element 4 units are then acted on so that their reference distances D1 can be made equal to the standard reference distance. This option can be adapted for the manufacture of batches but not for mass manufacture where the various carrier body 3 / additional element 4 units can be mixed together (a situation for which it would be more suitable to set a standard reference distance regardless of the actual determined reference distances D1).

Once all the carrier body 3 / additional element 4 units comprise the same reference distance D1, the carrier bodies 3 are fixed to the structure 200 of the corresponding machine using the additional elements 4 (their reference surfaces 40) as a reference, so that said carrier bodies 3 are aligned, dial indicators being used, for example, a correct alignment of the inner surfaces 30a being obtained once the carrier bodies 3 are fixed to said structure 200.

To ensure that the actions performed on the additional elements 4 for making the reference distances D1 equal are carried out correctly, it is preferable that said additional elements 4 are fixed to the carrier body 3, so that it is ensured that said additional elements 4 are rendered immobile while they are acted on, said actions being capable of being controlled in a simple manner in order to obtain the required reference distance D1, and the device 100 comprises fixing means for fixing the additional elements 4 to the corresponding carrier body 3. Preferably, the fixing means comprise a rod 5 for each additional element 4, and each carrier body 3 comprises a longitudinal hole 34 for each rod 5, which is substantially parallel to the inner surface 30a, which passes through said housing 33 and which is where the corresponding rod 5 is inserted. The additional element 4 comprises a through hole 41 through which the rod 5 passes when said rod 5 is inserted into the longitudinal hole 34 with the additional element 4 arranged in the housing 33, said rod 5 holding said additional element 4 against said carrier body 3, rendering it immobile. The housing 33 comprises a concentric outer section 33a and inner section 33b, the outer section 33a comprising a width (or diameter) greater than the inner section 33b, the carrier body 3 comprising a seating 35 between both sections 33a and 33b of the housing 33 due to the difference in width between said sections 33a and 33b. The additional element 4 comprises a first section 4a that is partially housed in the outer section 33a of housing 33, part of said first section 4a projecting out from the carrier body 3, and a second section 4b that is housed in the inner section 33a of said housing 33, the rod 5 causing the first section 4a of said additional element 4 to push on the seating 35, said additional element 4 being held in said housing 33 and therefore fixed in the carrier body 3. With the additional element 4 being fixed to the carrier body 3 in this manner, if any additional element 4 has been erroneously over-rectified or has been broken, for example, all that needs to be done is to remove the corresponding rod 5 from its longitudinal housing 34 in order to free said additional element 4, which can be easily removed from the corresponding housing 33, and can thus be replaced in a rapid and simple manner by a new additional element 4. The fixing means may also comprise, instead of rods 5, adhesive or equivalent elements with the result that the additional element 4 is thus fixed to the carrier body 3, or even a thread, the additional element 4 behaving in the manner of a screw.

## Claims

1. Optoelectronic measuring device comprising at least two carrier bodies (3) joined to each other, a scale (2) arranged inside the carrier bodies (3), and a read head (1) that faces the scale (2) and that is movable longitudinally in relation to the carrier bodies (3), each carrier body (3) comprising a longitudinal inner surface (30a) on which the read head (1) runs when it moves, each carrier body (3) comprising an outer surface (30b) substantially parallel to the inner surface (30a), there being defined between the inner and outer surfaces (30a, 30b) a thickness (30c) of said carrier body (3), the device (100) also comprising at least one additional element (4) joined to each carrier body (3) that is used as a reference to align the carrier bodies (3) with each other, each additional element (4) comprises a reference (400) arranged at a determined reference distance (D1) in relation to the inner surface (30a) of the corresponding carrier body (3), the reference distances (D1) being equal for all the carrier bodies (3) and their corresponding references (400), the references (400) being aligned with each other, so that the inner surfaces (30a) of the various carrier bodies (3) are aligned, the additional element (4) comprising an insert with a reference surface (40) substantially parallel to said surfaces (30a, 30b), and fixing means for keeping the additional element (4) fixed to the corresponding carrier body (3), the reference (400) of said additional element (4) being the reference surface (40), each carrier body (3) comprising a housing (33) that extends from the outer surface (30b) towards the inner surface (30a), the additional element (4) being partially housed in said housing (33), so that the reference surface (40) projects out from said outer surface (30b), **characterized in that** the reference distance (D1) between said reference surface (40) and the corresponding inner surface (30a) is greater than the thickness (30c) of said carrier body (3).

2. Device according to claim 1, wherein the reference surface (40) of the additional element (4) can be accessed from the outside of the carrier body (3).

3. Device according to claim 1 or 2, wherein the housing (33) is substantially transversal to the inner (30a) and outer (30b) surfaces.

4. Device according to any of claims 1 to 3, wherein the fixing means comprise a rod (5) attached to each carrier body (3), and each carrier body (3) comprises a longitudinal hole (34) through which the corresponding rod (5) passes, the additional element (4) comprising a through hole (41) through which said rod (5) passes, said rod (5) holding said additional element (4) against the carrier body (3), fixing it.

5. Device according to claim 4, wherein the housing (33) comprises a concentric outer section (33a) and an inner section (33b), the outer section (33a) comprising a greater width than the inner section (33b), the carrier body (3) comprising a seating (35) between both sections (33a, 33b) of the housing (33) due to the difference in width between said sections (33a, 33b), and the additional element (4) comprising a first section (4a) that is partially housed in the outer section (33a) of the housing (33) and a second section (4b) that is housed in the inner section (33a) of said housing (33), the rod (5) causing the first section (4a) of said additional element (4) to push on the seating (35), said additional element (4) being held in said housing (33) and therefore fixed in the carrier body (3).

6. Method for aligning carrier bodies for an optoelectronic measuring device that comprises at least two carrier bodies (3), a scale (2) arranged inside the carrier bodies (3), and a read head (1) that faces the scale (2), each carrier body (3) comprising an inner surface (30a) on which the read head (1) runs, at least one additional element (4), that is used as a reference to align the carrier bodies (3) with each other, being joined to each carrier body (3), where a reference (400) of said additional element (4), being a reference surface (40) of the additional element (4), is at a specific reference distance (D1) in relation to the inner surface (30a) of the corresponding carrier body (3), the reference distances (D1) being substantially equal for all the additional elements (4) and the corresponding carrier bodies (3), comprising: joining the carrier bodies (3) with the references (400) of said carrier bodies (3) being aligned with each other, so that the inner surfaces (30a) of said carrier bodies (3) are also aligned, housing the additional element (4) in a housing (33) of said carrier body (3), determining a reference distance (D1) between the inner surface (30a) of the carrier body (3) and the corresponding reference surface (40), comparing said reference distance (D1) with a standard pre-set reference distance which is greater than a thickness (30c) of the carrier body (3) and smaller than the reference distance (D1), acting on the additional element (4) in order to make the reference distance (D1) equal to the standard reference distance, the carrier bodies (3) being joined once the reference distances (D1) of each of the carrier bodies (3) to be joined have been made equal.

7. Method according to claim 6, wherein when an additional element (4) is acted on to make the reference distance (D1) equal to the standard reference distance, the reference surface (40) of said additional element (4) is machined or rectified, said reference distance (D1) being reduced.

## Patentansprüche

1. Optoelektronische Messvorrichtung, umfassend mindestens zwei miteinander verbundene Tragkörper (3), eine innerhalb der Tragkörper (3) angeordnete Waage (2) und einen der Waage (2) zugewandten Lesekopf (1), der relativ zu den Tragkörpern (3) in Längsrichtung beweglich ist, wobei jeder Tragkörper (3) eine längliche Innenfläche (30a) umfasst, auf der der Lesekopf (1) sich ggf. bewegt, wobei jeder Tragkörper (3) eine Außenfläche (30b) umfasst, die im Wesentlichen parallel zur Innenfläche (30a) ist, wobei zwischen Innen- und Außenfläche (30a, 30b) eine Dicke (30c) des Tragkörpers (3) definiert ist, wobei die Vorrichtung (100) ferner mindestens ein weiteres Element (4) umfasst, das mit jedem Tragkörper (3) verbunden ist und als Referenz zur Ausrichtung der Tragkörper (3) miteinander, wobei jedes Element (4) eine Referenz (400) umfasst, die in einem vorgegebenen Referenzabstand (D1) zur Innenfläche (30a) des entsprechenden Tragkörpers (3) angeordnet ist, wobei die Referenzanstände (D1) für alle Tragkörper (3) und deren entsprechende Referenzen (400) gleich sind, wobei die Referenzen (400) miteinander ausgerichtet sind, so dass die Innenflächen (30a) der verschiedenen Tragkörper (3) ausgerichtet sind, wobei das Element (4) eine Einlage mit einer Referenzfläche (40), die im Wesentlichen parallel zu den Flächen (30a, 30b) ist, und Fixiermittel zur Fixierung des Elements (4) am entsprechenden Tragkörper (3) umfasst, wobei die Referenz (400) des weiteren Elements (4) die Referenzfläche (40) ist, wobei jeder Tragkörper (3) ein Gehäuse (33) umfasst, das sich von der Außenfläche (30b) zur Innenfläche (30a) erstreckt, wobei das Element (4) teilweise in diesem Gehäuse (33) enthalten ist, so dass die Referenzfläche (40) von der Außenfläche (30b) hervorsteht, **dadurch gekennzeichnet, dass** der Referenzabstand (D1) zwischen der Referenzfläche (40) und der entsprechenden Innenfläche (30a) größer ist als die Dicke (30c) des Tragkörpers (3).

2. Vorrichtung nach Anspruch 1, wobei von außerhalb des Tragkörpers (3) aus auf die Referenzfläche (40) des weiteren Elements (4) zugegriffen werden kann.

3. Vorrichtung nach Anspruch 1 oder 2, wobei das Gehäuse (33) im Wesentlichen quer zur Innen- (30a) und Außenfläche (30b) verläuft.

4. Vorrichtung nach einem der Ansprüche 1 - 3, wobei die Fixiermittel eine mit jedem Tragkörper (3) verbundene Stange (5) umfassen, und jeder Tragkörper (3) eine längliche Öffnung (34) umfasst, die die entsprechende Stange (5) durchquert, wobei das weitere Element (4) eine Durchgangsöffnung (41) umfasst, die die Stange (5) durchquert, wobei die Stange (5) das weitere Element (4) gegen den Tragkörper (3) hält und dieses fixiert.

5. Vorrichtung nach Anspruch 4, wobei das Gehäuse (33) einen konzentrischen Außenabschnitt (33a) und einen Innenabschnitt (33b) umfasst, wobei der Außenabschnitt (33a) eine größere Breite umfasst als der Innenabschnitt (33b), wobei der Tragkörper (3) infolge des Breiteunterschieds zwischen den Abschnitten (33a, 33b) eine Auflagefläche (35) zwischen den beiden Abschnitten (33a, 33b) des Gehäuses (33) umfasst, und wobei das weitere Element (4) einen ersten Abschnitt (4a), der teilweise im Außenabschnitt (33a) des Gehäuses (33) enthalten ist, und einen zweiten Abschnitt (4b), der im Innenabschnitt (33a) des Gehäuses enthalten ist, umfasst, wobei die Stange (5) den ersten Abschnitt (4a) des weiteren Elements (4) veranlasst, die Auflagefläche (35) zu drücken, wobei das weitere Element (4) im Gehäuse (33) festgehalten und somit im Tragkörper (3) fixiert wird.

6. Vrfahren zur Ausrichtung von Tragkörpern für eine optoelektronische Messvorrichtung, umfassend mindestens zwei Tragkörper (3), eine innerhalb der Tragkörper (3) angeordnete Waage (2) und einen der Waage (2) zugewandten Lesekopf (1), wobei jeder Tragkörper (3) eine Innenfläche (30a) umfasst, auf der der Lesekopf (1) sich bewegt, mindestens ein weiteres Element (4), das als Referenz zur Ausrichtung der Tragkörper (3) miteinander verwendet wird, das mit jedem Tragkörper verbunden ist, wobei eine Referenz (400) des zusätzlichen Elements (4), wobei es sich um eine Referenzfläche (40) des zusätzlichen Elements (4) handelt, in einem vorgegebenen Referenzabstand (D1) zur Innenfläche (30a) des entsprechenden Tragkörpers (3) angeordnet ist, wobei die Referenzanstände (D1) für alle zusätzlichen Elemente (4) und deren entsprechende Tragkörper (3) im Wesentlichen gleich sind, umfassend: Verbinden der Tragkörper (3) mit den Referenzen (400) der miteinander ausgerichteten Tragkörper (3), so dass die Innenflächen (30a) der Tragkörper (3) ebenfalls ausgerichtet sind, Anordnen des weiteren Elements (4) in einem Gehäuse (33) des Tragkörpers (3), Bestimmen eines Referenzabstands (D1) zwischen der Innenfläche (30a) des Tragkörpers (3) und der entsprechenden Referenzfläche (40), Vergleichen des Referenzabstands (D1) mit einem standardmäßig vorgegebenen Referenzabstand, der größer ist als eine Dicke (30c) des Tragkörpers (3) und kleiner ist als der Referenzabstand (D1), Einwirken auf das weitere Element (4), um den Referenzabstand (D1) dem Standard-Referenzabstand gleich zu machen, wobei die Tragkörper (3) verbunden sind, sobald die Referenzabstände (D1) jedes der zu verbindenden Tragkörper (3) gleich gemacht worden sind.

7. Verfahren nach Anspruch 6, wobei, wenn auf ein weiteres Element (4) eingewirkt wird, um den Referenzabstand (D1) dem Standard-Referenzabstand gleich zu machen, die Referenzfläche (40) des weiteren Elements (4) bearbeitet oder verbessert wird, wobei der Referenzabstand (D1) reduziert wird.

## Revendications

1. Dispositif de mesure opto-électronique comprenant au moins deux corps de support (3) reliés entre eux, une échelle (2) disposée à l'intérieur des corps de support (3) et une tête de lecture (1) qui fait face à l'échelle (2) et qui est mobile longitudinalement par rapport aux corps de support (3), chaque corps de support (3) comprenant une surface interne longitudinale (30a) sur laquelle la tête de lecture (1) bouge lorsqu'elle se déplace, chaque corps de support (3) comprenant une surface externe (30b) globalement parallèle à la surface interne (30a), moyennant quoi, entre les surfaces interne et externe (30a, 30b), une épaisseur (30c) dudit corps de support (3) est définie, le dispositif (100) comprenant également au moins un élément supplémentaire (4), relié à chaque corps de support (3), qui est utilisé en tant que référence pour aligner les corps de support (3) entre eux, chaque élément supplémentaire (4) comprenant une référence (400) disposée à une distance de référence (D1) déterminée par rapport à la surface interne (30a) du corps de support (30) correspondant, les distances de référence (D1) étant égales pour tous les corps de support (3) et pour leurs références (400) respectives, les références (400) étant alignées entre elles de façon à ce que les surfaces internes (30a) des différents corps de support (3) soient alignées, l'élément supplémentaire (4) comprenant un insert avec une surface de référence (40) globalement parallèle auxdites surfaces (30a, 30b) et des moyens de fixation permettant de maintenir l'élément supplémentaire (4) fixé au corps de support (3) correspondant, la référence (400) dudit élément supplémentaire (4) étant la surface de référence (40), chaque corps de support (3) comprenant un boîtier (33) qui s'étend de la surface externe (30b) vers la surface interne (30a), l'élément supplémentaire (4) étant logé partiellement dans ledit boîtier (33), de façon à ce que la surface de référence (40) dépasse vers l'extérieur à partir de ladite surface externe (30b), **caractérisé en ce que** la distance de référence (D1) entre ladite surface de référence (40) et la surface interne (30a) correspondante est supérieure à l'épaisseur (30c) dudit corps de support (3).

2. Dispositif selon la revendication 1, dans lequel la surface de référence (40) de l'élément supplémentaire (4) est accessible de l'extérieur du corps de support (3).

3. Dispositif selon la revendication 1 ou 2, dans lequel le boîtier (33) est globalement transversal par rapport aux surfaces interne (30a) et externe (30b).

4. Dispositif selon l'une des revendications 1 à 3, dans lequel les moyens de fixation comprennent une tige (5) fixée à chaque corps de support (3) et chaque corps de support (3) comprend un trou longitudinal (34) à travers lequel passe la tige (5) correspondante, l'élément supplémentaire (4) comprenant un trou traversant (41) à travers lequel passe ladite tige (5), ladite tige (5) maintenant ledit élément supplémentaire (4) contre le corps de support (3), le fixant ainsi.

5. Dispositif selon la revendication 4, dans lequel le boîtier (33) comprend une section externe concentrique (33a) et une section interne (33b), la section externe (33a) présentant une largeur supérieure à la section interne (33b), le corps de support (3) comprenant un siège (35) entre les deux sections (33a, 33b) du boîtier (33), due à la différence de largeur entre lesdites sections (33a, 33b) et l'élément supplémentaire (4) comprenant une première section (4a) qui est partiellement logée dans la section externe (33a) du boîtier (33) et une deuxième section (4b) qui est logée dans la section interne (33a) dudit boîtier (33), la tige (5) faisant en sorte que la première section (4a) dudit élément supplémentaire (4) pousse sur le siège (35), ledit élément supplémentaire (4) étant maintenu dans ledit boîtier (33) et donc fixé dans le corps de support (3).

6. Procédé d'alignement de corps de support pour un dispositif de mesure opto-électronique qui comprend au moins deux corps de support (3), une échelle (2) disposée à l'intérieur des corps de support (3) et une tête de lecture (1) qui fait face à l'échelle (2), chaque corps de support (3) comprenant une surface interne (30a) sur laquelle la tête de lecture (1) se déplace, au moins un élément supplémentaire (4), qui est utilisé en tant que référence pour aligner les corps de support (3) entre eux, reliés à chaque corps de support (3), une référence (400) dudit élément supplémentaire (4), qui est une surface de référence (40) de l'élément supplémentaire (4), étant à une distance de référence spécifique (D1) par rapport à la surface interne (30a) du corps de support (3) correspondant, les distances de référence (D1) étant globalement égales pour tous les éléments supplémentaires (4) et tous les corps de support (3) correspondants, comprenant : l'assemblage des corps de support (3) avec les références (400) desdits corps de support (3) alignés entre eux, de façon à ce que les surfaces internes (30a) desdits corps de support (3) soient également alignées, le logement de l'élément supplémentaire (4) dans un boîtier (33) dudit corps de support (3), la détermination d'une distance de référence (D1) entre la surface interne (30a) du corps de support (3) et la surface de référence (40) correspondante, la comparaison de ladite distance de référence (D1) avec une distance de référence pré-réglée standard qui est supérieure à une épaisseur (30c) du corps de support (3) et inférieure à la distance de référence (D1), une action sur l'élément supplémentaire (4) afin de faire en sorte que la distance de référence (D1) soit égale à la distance de référence standard, les corps de support (3) étant assemblés une fois que les distances de référence (D1) de chacun des corps de support (3) à assembler sont égales.

7. Procédé selon la revendication 6, dans lequel on agit sur un élément supplémentaire (4) afin de faire en sorte que la distance de référence (D1) soit égale à la distance de référence standard, la surface de référence (40) dudit élément supplémentaire (4) étant usinée ou rectifiée, ladite distance de référence (D1) étant réduite.
